# EUROPEAN PATENT SPECIFICATION

(11) **EP 2 135 348 B1**
(45) Date of publication and mention of the grant of the patent: **04.11.2015**
(21) Application number: 07874025.5
(22) Date of filing: 06.12.2007
(51) Int. Cl.: H02J 3/38, H02M 3/158

(54) **DISTRIBUTED POWER HARVESTING SYSTEMS USING DC POWER SOURCES**
VERTEILTE LEISTUNGSWANDLER-SYSTEME MIT GLEICHSTROM-LEISTUNGSQUELLEN
SYSTÈMES DE COLLECTE D'ÉNERGIE DISTRIBUÉE UTILISANT DES SOURCES D'ALIMENTATION CC

(30) Priority: 06.12.2006 US 868851 P; 06.12.2006 US 868893 P; 07.12.2006 US 868962 P; 26.03.2007 US 908095 P; 04.12.2007 US 950271; 04.12.2007 US 950224; 04.12.2007 US 950307; 09.05.2007 US 916815 P
(43) Date of publication of application: 23.12.2009
(60) Divisional application: 13180936.0
(73) Proprietor: Solaredge Technologies, 46733 Herzeliya (IL)
(72) Inventor: ADEST, Meir, 46733 Raanana (IL); GALIN, Yoav, 46733 Raanana (IL); HANDELSMAN, Lior, Givataim 53631 (IL); FISHELOV, Amir, 46733 Tel Aviv (IL); SELLA, Guy, 46733 Bitan Aharon (IL)
(74) Representative: Puschmann Borchert Bardehle Patentanwälte Partnerschaft mbB
(86) International application number: PCT/IB2007/004591
(87) International publication number: WO 2008/132553

(56) References cited:
- EP-A2- 0 827 254
- WO-A2-2004/098261
- JP-A- 11 041 832
- JP-A- 11 103 538
- JP-A- 2003 124 492
- ALONSO O ET AL: "Cascaded h-bridge multilevel converter for grid connected photovoltaic generators with independent maximum power point tracking of each solar array" PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003; [ANNUAL POWER ELECTRONICS SPECIALISTS CONFERENCE], NEW YORK, NY :; IEEE, US LNKD- DOI:10.1109/PESC.2003.1218146, vol. 2, 15 June 2003 (2003-06-15), pages 731-735, XP010648900 ISBN: 978-0-7803-7754-7
- WALKER G R ET AL: "Cascaded DC-DC converter connection of photovoltaic modules" 33RD.ANNUAL IEEE POWER ELECTRONICS SPECIALISTS CONFERENCE. PESC 2002. CONFERENCE PROCEEDINGS. CAIRNS, QUEENSLAND, AUSTRALIA, JUNE 23 - 27, 2002; [ANNUAL POWER ELECTRONICS SPECIALISTS CONFERENCE], NEW YORK, NY : IEEE, US, vol. 1, 23 June 2002 (2002-06-23), pages 24-29, XP010596060 ISBN: 978-0-7803-7262-7

## Description

### 1. Field of the Invention

The field of the invention relates generally to power production from distributed DC power sources, and more particularly to management of distributed DC power sources in series installations.

### 2. Related Arts

The recent increased interest in renewable energy has led to increased research in systems for distributed generation of energy, such as photovoltaic cells (PV), fuel cells, batteries (e.g., for hybrid cars), etc. Various topologies have been proposed for connecting these power sources to the load, taking into consideration various parameters, such as voltage/current requirements, operating conditions, reliability, safety, costs, etc. For example, most of these sources provide low voltage output (normally a few volts for one cell, or a few tens of volts for serially connected cells), so that many of them need to be connected serially to achieve the required operating voltage. Conversely, a serial connection may fail to provide the required current, so that several strings of serial connections may need to be connected in parallel to provide the required current.

It is also known that power generation from each of these sources depends on manufacturing, operating, and environmental conditions. For example, various inconsistencies in manufacturing may cause two identical sources to provide different output characteristics. Similarly, two identical sources may react differently to operating and/or environmental conditions, such as load, temperature, etc. In practical installations, different source may also experience different environmental conditions, e.g., in solar power installations some panels may be exposed to full sun, while others be shaded, thereby delivering different power output. In a multiple-battery installation, some of the batteries may age differently, thereby delivering different power output. While these problems and the solutions provided by the subject invention are applicable to any distributed power system, the following discussion turns to solar energy so as to provide better understanding by way of a concrete example.

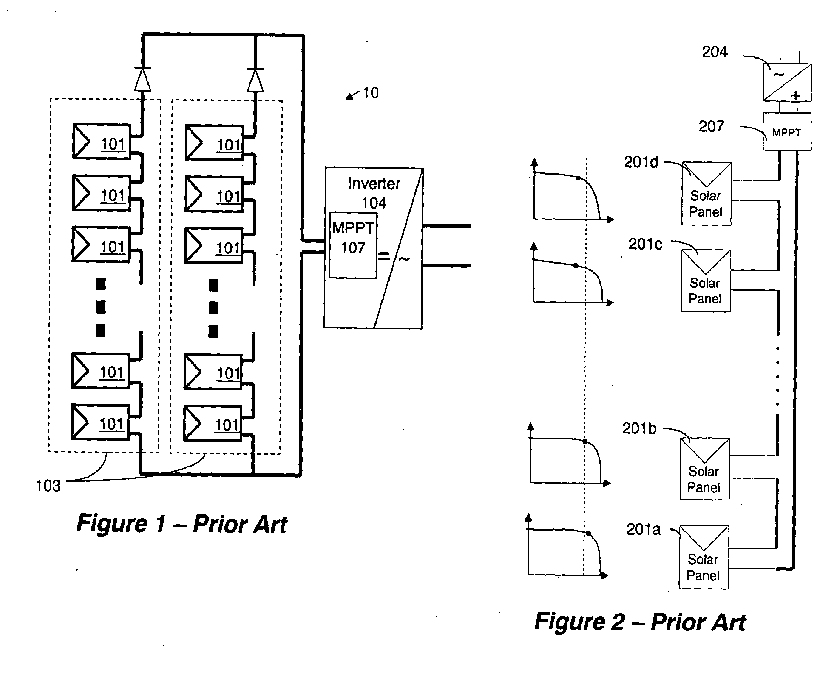

A conventional installation of solar power system 10 is illustrated in Figure 1. Since the voltage provided by each individual solar panel 101 is low, several panels are connected in series to form a string of panels 103. For a large installation, when higher current is required, several strings 103 may be connected in parallel to form the overall system 10. The solar panels are mounted outdoors, and their leads are connected to a maximum power point tracking (MPPT) module 107 and then to an inverter 104. The MPPT 107 is typically implemented as part of the inverter 104.The harvested power from the DC sources is delivered to the inverter 104, which converts the fluctuating direct-current (DC) into alternating-current (AC) having a desired voltage and frequency, which is usually 110V or 220V at 60Hz, or 220V at 50Hz (It is interesting to note the even in the US many inverters produce 220V, which is then split into two 110V feeds in the electric box). The AC current from the inverter 104 may then be used for operating electric appliances or fed to the power grid. Alternatively, if the installation is not tied to the grid, the power extracted from the inverter may be directed to a conversion and charge/discharge circuit to store the excess power created as charge in batteries. In case of a battery-tied application, the inversion stage might be skipped altogether, and the DC output of the MPPT stage 107 may be fed into the charge/discharge circuit.

As noted above, each solar panel 101 supplies relatively very low voltage and current. The problem facing the solar array designer is to produce a standard AC current at 120V or 220V root-mean-square (RMS) from a combination of the low voltages of the solar panels. The delivery of high power from a low voltage requires very high currents, which cause large conduction losses on the order of the second power of the current (I²). Furthermore, a power inverter, such as the inverter 104, which is used to convert DC current to AC current, is most efficient when its input voltage is slightly higher than its output RMS voltage multiplied by the square root of 2. Hence, in many applications, the power sources, such as the solar panels 101, are combined in order to reach the correct voltage or current. The most common method connects the power sources in series in order to reach the desirable voltage and in parallel in order to reach the desirable current, as shown in Figure 1. A large number of the panels 101 are connected into a string 103 and the strings 103 are connected in parallel to the power inverter 104. The panels 101 are connected in series in order to reach the minimal voltage required for the inverter. Multiple strings 103 are connected in parallel into an array to supply higher current, so as to enable higher power output.

While this configuration is advantageous in terms of cost and architecture simplicity, several drawbacks have been identified in the literature for such architecture. One recognized drawback is inefficiencies cause by non-optimal power draw from each individual panel, as explained below. As explained above, the output of the DC power sources is influenced by many conditions. Therefore, to maximize the power draw from each source, one needs to draw the combination of voltage and current that provides the peak power for the currently prevailing conditions. As conditions change, the combination of voltage and current draw may need to be changed as well.

Figure 2 illustrates one serial string of DC sources, e.g., solar panels 201a-201d, connected to MPPT circuit 207 and inverter 204. The current versus voltage (IV) characteristics plotted (210a - 210d) to the left of each DC source 201. For each DC source 201, the current decreases as the output voltage increases. At some voltage value the current goes to zero, and in some applications may assume a negative value, meaning that the source becomes a sink. Bypass diodes are used to prevent the source from becoming a sink. The power output of each source 201, which is equal to the product of current and voltage (P=I*V), varies depending on the voltage drawn from the source. At a certain current and voltage, close to the falling off point of the current, the power reaches its maximum. It is desirable to operate a power generating cell at this maximum power point. The purpose of the MPPT is to find this point and operate the system at this point so as to draw the maximum power from the sources.

In a typical, conventional solar panel array, different algorithms and techniques are used to optimize the integrated power output of the system 10 using the MPPT module 107. The MPPT module 107 receives the current extracted from all of the solar panels together and tracks the maximum power point for this current to provide the maximum average power such that if more current is extracted, the average voltage from the panels starts to drop, thus lowering the harvested power. The MPPT module 107 maintains a current that yields the maximum average power from the overall system 10.

Maximum power point tracking techniques are reviewed in: "Comparison of Photovoltaic Array Maximum Power Point Tracking Techniques" by T. Esram & P. L.Chapman, IEEE Transactions on Energy Conversion (Accepted for future publication, Volume PP, Issue 99, 2006 Page(s):1 - 1, Digital Object Identifier 10.1109/TEC.2006.874230).

However, since the sources 201a - 201d are connected in series to a single MPPT 207, the MPPT must select a single point, which would be somewhat of an average of the MPP of the serially connected sources. In practice, it is very likely that the MPPT would operate at an I-V point that is optimum to only a few or none of the sources. In the example of Figure 2, the selected point is the maximum power point for source 201b, but is off the maximum power point for sources 201a, 201c and 201d. Consequently, the arrangement is not operated at best achievable efficiency.

Turning back to the example of a solar system 10 of Figure 1, fixing a predetermined constant output voltage from the strings 103 may cause the solar panels to supply lower output power than otherwise possible. Further, each string carries a single current that is passed through all of the solar panels along the string. If the solar panels are mismatched due to manufacturing differences, aging or if they malfunction or are placed under different shading conditions, the current, voltage and power output of each panel will be different. Forcing a single current through all of the panels of the string causes the individual panels to work at a non-optimal power point and can also cause panels which are highly mismatched to generate "hot spots" due to the high current flowing through them. Due to these and other drawbacks of conventional centralized methods, the solar panels have to be matched properly. In some cases external diodes are used to bypass the panels that are highly mismatched. In conventional multiple string configurations all strings have to be composed of exactly the same number of solar panels and the panels are selected of the same model and must be install at exactly the same spatial orientation, being exposed to the same sunlight conditions at all times. This is difficult to achieve and can be very costly.

Various different topologies have been proposed in order to overcome the above deficiencies of the serial installation. For example, some have proposed to have inverters coupled to each DC source, and connect all of the inverters in parallel. Others have proposed to have DC/DC converter connected to each DC source, and to connect all of the converters serially or in parallel to a central inverter. Among the DC/DC converters proposed for use with the DC sources are boost converter, buck converter, buck-boost converter, or a Cuk converter. It has also been proposed to incorporate MPPT into each DC power source, e.g., into each solar panel, and connect the panels serially.

For further discussion of the above issues relating to distributed power sources and solar panels, the reader is highly encouraged to review the following literature, which may or may not be prior art.
- Cascade DC-DC Converter Connection of Photovoltaic Modules, G.R. Walker and P.C. Sernia, Power Electronics Specialists Conference, 2002. (PESC02), Vol. 1 IEEE, Cairns, Australia, pp. 24-29.
- Topology for Decentralized Solar Energy Inverters with a Low Voltage AC-Bus, Bjorn Lindgren.
- Integrated Photovoltaic Maximum Power Point Tracking Converter, Johan H.R. Enslin et al., IEEE Transactions on Industrial Electronics, Vol. 44, No. 6, December 1997.
- A New Distributed Converter Interface for PV Panels, R. Alonso et al., 20th European Photovoltaic Solar Energy Conference, 6-10 June 2005, Barcelona, Spain:
- Intelligent PV Module for Grid-Connected PV Systems, Eduardo Roman, et al., IEEE Transactions on Industrial Electronics, Vol. 53, No. 4, August 2006. Also in Spanish patent application ES2249147.
- A Modular Fuel Cell, Modular DC-DC Converter Concept for High Performance and Enhanced Reliability, L. Palma and P. Enjeti, Power Electronics Specialists Conference, 2007, PESC 2007, IEEE Volume , Issue , 17-21 June 2007 Page(s):2633 - 2638. Digital Object Identifier 10.1109/PESC.2007.4342432.
- Experimental Results of Intelligent PV Module for Grid-Connected PV Systems, R. Alonso et al., Twentyfirst European Photovoltaic Solar Energy Conference, Proceedings of the International Conference held in Dresden, Germany, 4 - 8 September 2006.
- Cascaded DC-DC Converter Connection of Photovoltaic Modules, G.R. Walker and P.C. Sernia, IEEE Transactions on Power Electronics, Vol. 19, No. 4, July 2004.
- Cost Effectiveness of Shadow Tolerant Photovoltaic Systems, Quaschning, V.; Piske, R.; Hanitsch, R., Euronsun 96, Freiburg, September 16-19, 1996.
- Evaluation Test results of a New Distributed MPPT Converter, R. Orduz and M. A. Egido, 22nd European Photovoltaic Solar Energy Conference, 3-7 September 2007, Milan, Italy.
- Energy Integrated Management System for PV Applications, S. Uriarte et al., 20th European Photovoltaic Solar Energy Conference, 6 -10 June 2005, Barcelona, Spain.
- U.S. Published Application 2006/0185727

Alonso O et al.: "Cascaded h-bridge multilevel converter for grid connected photovoltaic generators with independent maximum power point tracking of each solar array", PESC'03. 2003 IEEE 34th Annual Power Electronics Specialists Conference Proceedings, Acapulco, Mexico; June 15 - 19, 2003; [Annual Power Electronics Specialists Conference], New York, NY; IEEE, US LNKD-DOI: 10.1109/PESC.20031218146, vol. 2, 15 June, 2003 (2003-06-15), pages 731-735, XP010648900 discloses a control method and proportional PWM modulation of the cascaded H-bridge multilevel converter for grid connected photovoltaic systems. This control is supposed to make each H-bridge module supply different power levels, allowing therefore for each module an independent maximum power point tracking of the corresponding photovoltaic array. The modules of the system consist of a solar array and a DC-to-DC converter controlled by a MPPT algorithm. The available energy is transferred to a grid by means of a half-bridge or full-bridge converter.

Walker G R et al.: "Cascaded DC-DC converter connection of photovoltaic modules", 33rd annual IEEE Power Electronics Specialists Conference, PESC 2002. Conference Proceedings, Cairns, Queensland, Australia, June 23 -27, 2002; [Annual Power Electronics Specialists Conference], New York, NY: IEEE, US, vol. 1, 23 June, 2002 (2002-06-23), pages 24-29, XP010596060, as mentioned above, proposes non isolated per-panel DC-DC converters connected in series to create a high voltage string connected to a simplified DC-AC inverter.

As noted in some of the above cited works, integrating inverters into the individual cells has many drawbacks, including high costs, low safety (especially in solar installations), and reliability. Therefore, serial connection is still preferred, especially for solar panel installations. The proposals for including DC-DC converters and MPPT into the individual sources, and then connect their outputs serially to an inverter are attractive. However, incorporating MPPT into each panel is still problematic in serial application, as each MPPT would attempt to drive its source at different current, while in a serial connection the same current must flow through all of the panels. Moreover, it is unclear what type of DC-DC converter would provide the best results and how to incorporate an MPPT into such an arrangement. Therefore, solutions are still needed for an effective topology for connecting multiple DC power sources to the load, i.e., power grid, power storage bank, etc.

As already mentioned above, various environmental and operational conditions impact the power output of DC power sources. In the case of solar panels, solar radiance, ambient temperature, and shading, whether from near objects such as trees or far objects such as clouds, impact the power extracted from each solar panel. Depending on the number and type of panels used, the extracted power may vary widely in the voltage and current. Owners and even professional installers find it difficult to verify the correct operation of the solar system. With time, many other factors, such as aging, dust and dirt collection and module degradation affect the performance of the solar array.

The sensitivity of photovoltaic panels to external conditions is even more profound when concentrated phovoltaics (CPV) are used. In such installations, the sun radiation is concentrated by use of lenses or mirrors onto small cells. These cells may be much more efficient then typical PV cells and use a technology knows as double- or triple-junction, in which a number of p-n junctions are constructed one on top of the other - each junction converts light from a certain part of the spectrum and allows the rest to pass-through to the next junction. Thus, these cells are much more efficient (with peak efficiencies of over 40%). Since these cells are expensive, they are usually used in CPV applications which call for smaller cells. However, the power output of CPV installations now depends upon fluctuations in the intensity of different parts of the spectrum of the sun (and not only the total intensity), and imperfections or distortions in the lenses or mirrors used. Thus, having a single MPPT for many panels will lead to significant power loss, and great benefits are realized from using a panel- (or cell-) level MPPT as described in aspects of the present invention.

Another field in which traditional photovoltaic installations face many problems is the developing market of building-integrated photovoltaics (BIPV). In BIPV installations, the panels are integrated into buildings during construction - either as roof panels or as structural or additional elements in the walls and windows. Thus, BIPV installations suffer greatly from local partial shading due to the existence of other structural elements in the vicinity of the panels. Moreover, the panels are naturally positioned on many different facets of the building, and therefore the lighting conditions each panel experiences may vary greatly. Since in traditional solutions the panels are stringed together to a joint MPPT, much power is lost. A solution that could harvest more power would obviously be very beneficial in installations of this type.

Yet another problem with traditional installations is the poor energy utilization in cases of low sun-light. Most inverters require a certain minimal voltage (typically between 150V to 350V) in order to start functioning. If there is low light, the aggregated voltage from the panels may not reach this minimal value, and the power is thus lost. A solution that could boost the voltage of panels suffering from low light, would therefore allow for the produced energy to be harvested.

During installation of a solar array according to the conventional configurations 10, the installer can verify the correctness of the installation and performance of the solar array by using test equipment to check the current-voltage characteristics of each panel, each string and the entire array. In practice, however, individual panels and strings are generally either not tested at all or tested only prior to connection. This happens because current measurement is done by either a series connection to the solar array or a series resistor in the array which is typically not convenient. Instead, only high-level pass/fail testing of the overall installation is performed.

After the initial testing of the installation, the solar array is connected to inverter 104 which optionally includes a monitoring module which monitors performance of the entire array. The performance information gathered from monitoring within the inverter 104 includes integrated power output of the array and the power production rate, but the information lacks any fine details about the functioning of individual solar panels. Therefore, the performance information provided by monitoring at the inverter 104 is usually not sufficient to understand if power loss is due to environmental conditions, from malfunctions or from poor installation or maintenance of the solar array. Furthermore, integrated information does not pinpoint which of solar panels 101 is responsible for a detected power loss.

In view of the above, a newly proposed topology for connecting multiple DC power sources to the load should also lend itself to easy testing and operational verification during and after installation to maximize power output from each DC power source.

This objective is achieved by the subject matter of the independent claims. Preferred embodiments of the invention are characterized in the sub claims

The following summary of the invention is provided in order to provide a basic understanding of some aspects and features of the invention. This summary is not an extensive overview of the invention, and as such it is not intended to particularly identify key or critical elements of the invention, or to delineate the scope of the invention. Its sole purpose is to present some concepts of the invention in a simplified form as a prelude to the more detailed description that is presented below.

Aspects of the invention provide a topology for distributed DC power sources serially connected to a central power supplier, e.g., a single inverter or a single converter. Aspects of the invention provide system and a method for monitoring of individual DC power sources in a distributed power harvesting installation and adjusting the current and voltage from each DC power source to maximize power output from each DC power source.

According to aspects of the invention, a distributed power harvesting system comprising: a plurality of DC power sources; a plurality of converters, each of the converters comprising: input terminals coupled to a respective DC power source; output terminals coupled in series to the other converters, thereby forming a serial string; a circuit loop setting the voltage and current at the input terminals of the converter according to predetermined criteria; and, a power conversion portion for converting the power received at the input terminals to an output power at the output terminals; and a power supplier coupled to the serial string, the power supplier comprising a control part maintaining the input to the power supplier at a predetermined value. The control part may maintain the input voltage to the power supplier at a predetermined value. The control part may maintain the input current to the power supplier at a predetermined value. The power supplier may comprise a DC/AC inverter. The power supplier may comprise a battery charger. The circuit loop may comprise an MPPT part setting the voltage and current at the input terminals of the converter to maximum power point of the respective DC power source. The power conversion portion may comprise: a buck converter; a boost converter; a controller selectively activating either the buck converter or the boost converter in response to the MPPT part and current or voltage at the output terminals. An inductor may be shared by the buck converter and the boost converter, and the controller comprises a pulse-width modulation portion. The control part may comprise a shunt regulator coupled in parallel with the power supplier and regulating the input voltage to a preselected constant input voltage. The system may further comprise one or more additional serial strings coupled to the power supplier. The system may further comprise: a plurality of current sensors; and a plurality of voltage sensors; wherein each of the current sensors and each of the voltage sensors is coupled between a respective converter and DC power source and providing current information and voltage information to the MPPT part. Each of the plurality of DC power sources may comprise a solar panel or a building integrated solar panel. At least one of the plurality of DC power sources may comprise a fuel cell. At least one of the plurality of DC power sources may comprise a battery. Each of the plurality of converters may further comprise a safety module limiting the output to a preset safe value until a predetermined event has occurred. The predetermined event may comprise one of a load above a preset threshold is applied to the converter or a release signal has been detected. Each of the converters may further comprise a plurality of switching devices, each of the switching devices forming a current bypass to at least one DC power source. The solar panel may comprise a plurality of cell strings, each cell string comprising serially connected solar cells and a switching device coupled to bypass the serially connected solar cells. The switching device may comprise a transistor. Each of the converters may further comprise a monitoring module monitoring and transmitting status related data, the status related data comprising at least one of: input current to the converter, input voltage to the converter, temperature of the power source, input power to the converter, and available illumination.

According to an aspect of the invention, a method for harvesting power from a distributed power system having a plurality of DC power sources and a plurality of DC power converters is provided, the method comprising: coupling each of the power sources to a respective DC power converter; coupling the power converters in series, to thereby form at least one serial string; coupling the serial string to a power delivery device; fixing one of input voltage or input current to the power delivery device to a predetermined value, thereby forcing current flowing through the serial string to vary according to power provided by the power sources; and controlling power output from each power source individually and individually varying the input voltage and current to each respective converter according to a predetermined criteria. Fixing one of the input voltage or input current may comprise fixing to a predetermined constant value. Coupling the serial string to a power delivery device may comprise coupling the serial string to a DC/AC inverter and fixing the input voltage to the inverter. Monitoring power output may comprise tracking maximum power point of the power source, and individually varying the input voltage and current comprises setting the input voltage and current so as to draw maximum power from each power source. The method may further comprise individually converting the input voltage and current of each converter to output power at current level dictated by the current flowing through the serial string and at a floating voltage. The method may further comprise individually converting the input voltage and current of each converter to output power at current level dictated by the current flowing through the serial string and at a floating voltage. The method may further comprise monitoring load on each converter individually and limiting power output from each converter to a preset safe level until the load reaches a preset value. The method may further comprise monitoring power output of at least one of the power source and DC power converter and directing current to a bypass when the power output exhibits predetermined characteristics. The method may further comprise individually operating each power converter to monitor and report power related data, the power related data comprising at least one of: input current to the converter, input voltage to the converter, temperature of the power source, input power to the converter, and available illumination.

According to aspects of the invention, a solar power installation is provided, comprising: a DC/AC inverter comprising means for maintaining the input voltage or current to the inverter at a predetermined value; a plurality of serial strings coupled in parallel to the DC/AC inverter, each of the serial string comprising: a plurality of solar panels; a plurality of converters, each of the converters comprising: input terminals coupled to a respective solar panel; output terminals coupled in series to the other converters, thereby forming one serial string; an MPPT part setting the voltage and current at the input terminals of the converter according to maximum power point of the respective solar panel; and, a power conversion portion for converting the power received at the input terminals to an output power at the output terminals. The predetermined value may comprise a constant value. The power conversion portion may convert the power received at the input terminals to output power having current substantially equal to the total power provided by the plurality of solar panels in the serial string divided by the predetermined constant voltage at the input of the inverter. The power conversion portion may comprise a power conversion controller controlling pulse width modulation of the power conversion portion so as to output power having current substantially equal to the total power provided by the plurality of solar panels in the serial string divided by the predetermined constant voltage at the input of the inverter. Each of the power conversion portion may comprise: a buck converter; a boost converter; a pulse width modulator; and, a digital controller controlling the pulse width modulator to selectively operate either the buck converter or the boost converter. Each of the serial strings may further comprise: a plurality of current sensors, each measuring current output of one solar panel and sending measured current signal to a respective digital controller; and a plurality of voltage sensors, each measuring voltage output of one solar panel and sending measured voltage signal to a respective digital controller; wherein each digital controller adjusts current and voltage draw to obtain maximum available power. The solar power installation may further comprise a safety module limiting the output voltage to a preset safe value as long as no load above a preset threshold is applied to the converter. The solar power installation of claim 30, wherein each of the solar panels comprises a plurality of cell strings, each cell string comprising serially connected solar cells and a switching device coupled to bypass the serially connected solar cells. The switching device may comprise a transistor. Each of the converters may further comprise a monitoring module monitoring and transmitting power related data, the power related data comprising at least one of: input current to the converter, input voltage to the converter, temperature of the power source, spatial orientation of the power source, and available illumination.

According to aspects of the invention, a method for improving the reliability of components within the load in a distributed power system having a plurality of DC power sources coupled to a central load is provided, comprising: coupling the DC power sources to the central load; maintaining the input to the central load to a fixed predetermined voltage, the voltage being a safe operating voltage for the components within the load; varying the current input to the central load according to the power drawn from the DC power sources. The central load may comprise a DC/AC inverter, and the step of maintaining the input comprises maintaining the input voltage to the inverter. Coupling the DC power sources may comprise coupling each of a plurality of solar panels to a respective converter from a plurality of converters, and coupling all of the converters to the inverter. The method may further comprise operating each converter to boost the voltage obtained from a respective solar panel as soon as the respective solar panel starts to output electrical energy.

### BRIEF DESCRIPTION OF THE DRAWINGS

The accompanying drawings, which are incorporated in and constitute a part of this specification, exemplify the embodiments of the present invention and, together with the description, serve to explain and illustrate principles of the invention. The drawings are intended to illustrate major features of the exemplary embodiments in a diagrammatic manner. The drawings are not intended to depict every feature of actual embodiments nor relative dimensions of the depicted elements, and are not drawn to scale.
Figure 1 illustrates a conventional centralized power harvesting system using DC power sources.
Figure 2 illustrates current versus voltage characteristic curves for one serial string of DC sources.
Figure 3 illustrates a distributed power harvesting system, according to aspects of the invention, using DC power sources.
Figures 4A and 4B illustrate the operation of the system of Figure 3 under different conditions, according to aspects of the invention.
Figure 4C illustrates an embodiment of the invention wherein the inverter controls the input current.
Figure 5 illustrates a distributed power harvesting system, according to other aspects of the invention, using DC power sources.
Figure 6 illustrates an exemplary DC-to-DC converter according to aspects of the invention.
Figure 7 illustrates a power converter, according to aspects of the invention including control features of the aspects of the invention.
Figure 8 illustrates an arrangement of a solar panel according to the prior art.
Figure 9 illustrates an arrangement according to an embodiment of the invention for reducing the power loss in solar strings.
Figure 10 illustrates another arrangement according to an embodiment of the invention for reducing the power loss in solar strings.
Figure 11 illustrates an arrangement according to an embodiment of the invention for bypassing a solar string.

### DETAILED DESCRIPTION

The topology provided by the subject invention solves many of the problems associated with, and has many advantages over, the prior art topologies. For example, the inventive topology enables serially connecting mismatched power sources, such as mismatched solar panels, panel of different models and power ratings, and even panels from different manufacturers and semiconductor materials. It allows serial connection of sources operating under different conditions, such as, e.g., solar panels exposed to different light or temperature conditions. It also enables installations of serially connected panels at different orientations or different sections of the roof or structure. This and other features and advantages will become apparent from the following detailed description.

Aspects of the present invention provide a system and method for combining power from multiple DC power sources into a single power supply. According to aspects of the present invention, each DC power source is associated with a DC-DC power converter. Modules formed by coupling the DC power sources to their associated converters are coupled in series to provide a string of modules. The string of modules is then coupled to an inverter having its input voltage fixed. A maximum power point control loop in each converter harvests the maximum power from each DC power source and transfers this power as output from the power converter. For each converter, substantially all the input power is converted to the output power, such that the conversion efficiency may be 90% or higher in some situations. Further, the controlling is performed by fixing the input current or input voltage of the converter to the maximum power point and allowing output voltage of the converter to vary. For each power source, one or more sensors perform the monitoring of the input power level to the associated converter. In some aspects of the invention, a microcontroller may perform the maximum power point tracking and control in each converter by using pulse width modulation to adjust the duty cycle used for transferring power from the input to the output.

One aspect of the present invention provides a greater degree of fault tolerance, maintenance and serviceability by monitoring, logging and/or communicating the performance of each solar panel. In one aspect of the invention, the microcontroller that is used for maximum power point tracking, may also be used to perform the monitoring, logging and communication functions. These functions allow for quick and easy troubleshooting during installation, thereby significantly reducing installation time. These functions are also beneficial for quick detection of problems during maintenance work. Aspects of the present invention allow easy location, repair, or replacement of failed solar panels. When repair or replacement is not feasible, bypass features of the current invention provide increased reliability.

In one aspect, the present invention relates to arrays of solar cells where the power from the cells is combined. Each converter may be attached to a single solar cell, or a plurality of cell connected in series, in parallel, or both, e.g., parallel connection of strings of serially connected cells. In one embodiment each converter is attached to one panel of photovoltaic strings. However, while applicable in the context of solar power technology, the aspects of the present invention may be used in any distributed power network using DC power sources. For example, they may be used in batteries with numerous cells or hybrid vehicles with multiple fuel cells on board. The DC power sources may be solar cells, solar panels, electrical fuel cells, electrical batteries, and the like. Further, although the discussion below relates to combining power from an array of DC power sources into a source of AC voltage, the aspects of the present invention may also apply to combining power from DC sources into another DC voltage.

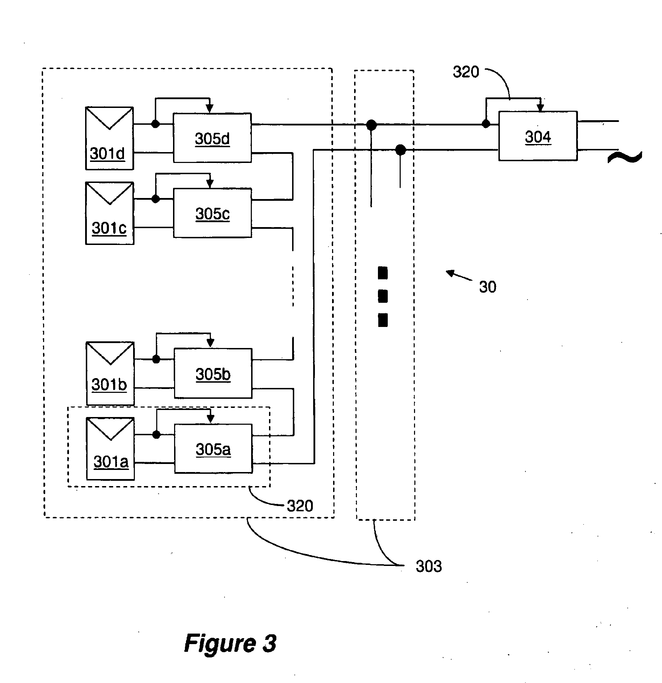

Figure 3 illustrates a distributed power harvesting configuration 30, according to an embodiment of the present invention. Configuration 30 enables connection of multiple power sources, for example solar panels 301a - 301d, to a single power supply. In one aspect of the invention, the series string of all of the solar panels may be coupled to an inverter 304. In another aspect of the invention, several serially connected strings of solar panels may be connected to a single inverter 304. The inverter 304 may be replaced by other elements, such as, e.g., a charging regulator for charging a battery bank.

In configuration 30, each solar panel 301a - 301d is connected to a separate power converter circuit 305a - 305d. One solar panel together with its associated power converter circuit forms a module, e.g., module 320. Each converter 305a - 305d adapts optimally to the power characteristics of the connected solar panel 301a - 301d and transfers the power efficiently from converter input to converter output. The converters 305a - 305d can be buck converters, boost converters, buck/boost converters, flyback or forward converters, etc. The converters 305a - 305d may also contain a number of component converters, for example a serial connection of a buck and a boost converter.

Each converter 305a - 305d includes a control loop that receives a feedback signal, not from the converter's output current or voltage, but rather from the converter's input coming from the solar panel 301. An example of such a control loop is a maximum power point tracking (MPPT) loop. The MPPT loop in the converter locks the input voltage and current from each solar panel 301a - 301d to its optimal power point.

Conventional DC-to-DC converters may have a wide input voltage range at their input and an output voltage that is predetermined and fixed. In these conventional DC-to-DC voltage converters, a controller within the converter monitors the current or voltage at the input, and the voltage at the output. The controller determines the appropriate pulse width modulation (PWM) duty cycle to fix the output voltage to the predetermined value by increasing the duty cycle if the output voltage drops. Accordingly, the conventional converter includes a feedback loop that closes on the output voltage and uses the output voltage to further adjust and fine tune the output voltage from the converter. As a result of changing the output voltage, the current extracted from the input is also varied.

In the converters 305a - 305d, according to aspects of the present invention, a controller within the converter 405 monitors the voltage and current at the converter input and determines the PWM in such a way that maximum power is extracted from the attached panel 301a - 301d. The controller of the converter 405 dynamically tracks the maximum power point at the converter input. In the aspects of the present invention, the feedback loop is closed on the input power in order to track maximum input power rather than closing the feedback loop on the output voltage as performed by conventional DC-to-DC voltage converters.

As a result of having a separate MPPT circuit in each converter 305a - 305d, and consequently for each solar panel 301a - 301d, each string 303 in the embodiment shown in Figure 3 may have a different number or different brand of panels 301a - 301d connected in series. The circuit of Figure 3 continuously performs MPPT on the output of each solar panel 301a - 301d to react to changes in temperature, solar radiance, shading or other performance factors that impact that particular solar panel 301a - 301d. As a result, the MPPT circuit within the converters 305a - 305d harvests the maximum possible power from each panel 301a - 301d and transfers this power as output regardless of the parameters impacting the other solar panels.

As such, the aspects of the invention shown in Figure 3 continuously track and maintain the input current and the input voltage to each converter at the maximum power point of the DC power source providing the input current and the input voltage to the converter. The maximum power of the DC power source that is input to the converter is also output from the converter. The converter output power may be at a current and voltage different from the converter input current and voltage. The output current and voltage from the converter are responsive to requirements of the series connected portion of the circuit.

In one aspect of the invention, the outputs of converters 305a - 305d are series connected into a single DC output that forms the input to the load or power supplier, in this example, inverter 304. The inverter 304 converts the series connected DC output of the converters into an AC power supply. The load, in this case inverter 304, regulates the voltage at the load's input. That is, in this example, an independent control loop 320 holds the input voltage at a set value, say 400 volts. Consequently, the inverter's input current is dictated by the available power, and this is the current that flows through all serially connected DC sources. On the other hand, while the output of the DC-DC converters must be at the inverter's current input, the current and voltage input to the converter is independently controlled using the MPPT.

In the prior art, the input voltage to the load was allowed to vary according to the available power. For example, when a lot of sunshine is available in a solar installation, the voltage input to the inverter can vary even up to 1000 volts. Consequently, as sunshine illumination varies, the voltage varies with it, and the electrical components in the inverter (or other power supplier or load) are exposed to varying voltage. This tends to degrade the performance of the components and ultimately causes them to fail. On the other hand, by fixing the voltage or current to the input of the load or power supplier, here the inverter, the electrical components are always exposed to the same voltage or current and therefore would have extended service life. For example, the components of the load (e.g., capacitors, switches and coil of the inverter) may be selected so that at the fixed input voltage or current they operate at, say, 60% of their rating. This would improve the reliability and prolong the service life of the component, which is critical for avoiding loss of service in applications such as solar power systems.

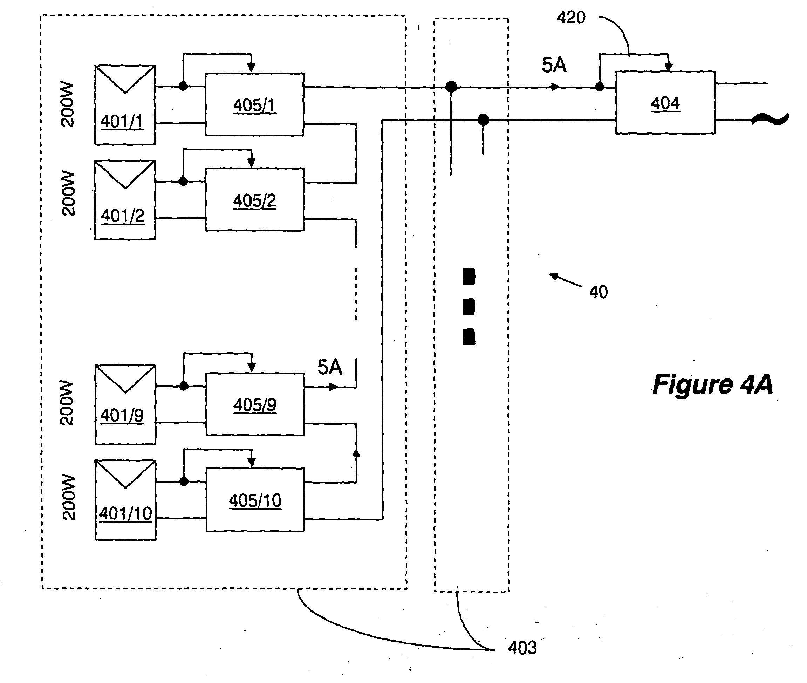

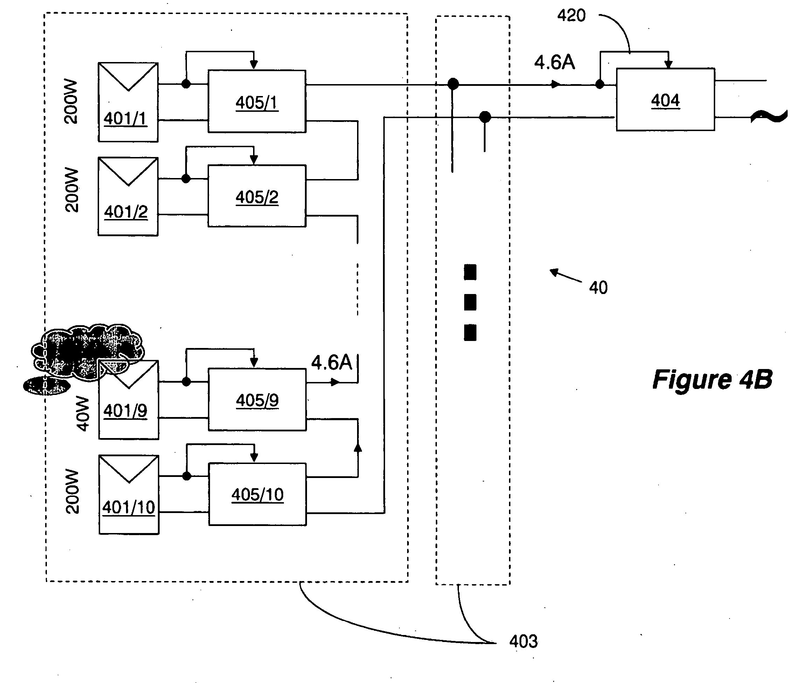

Figures 4A and 4B illustrate the operation of the system of Figure 3 under different conditions, according to aspects of the invention. The exemplary configuration 40 is similar to configuration 30 of Figure 3. In the example shown, ten DC power sources 401/1 through 401/10 are connected to ten power converters 405/1 through 405/10, respectively. The modules formed by the DC power sources and their corresponding converters are coupled together in series to form a string 403. In one aspect of the invention, the series-connected converters 405 are coupled to a DC-to-AC inverter 404.

The DC power sources may be solar panels and the example is discussed with respect to solar panels as one illustrative case. Each solar panel 401 may have a different power output due to manufacturing tolerances, shading, or other factors. For the purpose of the present example, an ideal case is illustrated in Figure 4A, where efficiency of the DC-to-DC conversion is assumed to be 100% and the panels 501 are assumed to be identical. In some aspects of the invention, efficiencies of the converters may be quite high and range at about 95%-99%. So, the assumption of 100% efficiency is not unreasonable for illustration purposes. Moreover, according to embodiments of the subject invention, each of the DC-DC converters is constructed as a power converter, i.e., it transfers to its output the entire power it receives in its input with very low losses.

Power output of each solar panel 401 is maintained at the maximum power point for the panel by a control loop within the corresponding power converter 405. In the example shown in Figure 4A, all of the panels are exposed to full sun illumination and each solar panel 401 provides 200W of power. Consequently, the MPPT loop will draw current and voltage level that will transfer the entire 200W from the panel to its associated converter. That is, the current and voltage dictated by the MPPT form the input current *I*ᵢₙ and input voltage *V*ᵢₙ to the converter. The output voltage is dictated by the constant voltage set at the inverter 404, as will be explained below. The output current *I*ₒᵤₜ would then be the total power, i.e., 200W, divided by the output voltage *V*ₒᵤₜ.

As noted above, according to a feature of the invention, the input voltage to inverter 404 is controlled by the inverter (in this example, kept constant), by way of control loop 420. For the purpose of this example, assume the input voltage is kept as 400V (ideal value for inverting to 220VAC). Since we assume that there are ten serially connected power converters, each providing 200W, we can see that the input current to the inverter 404 is 2000W/400V = 5A. Thus, the current flowing through each of the converters 401/1-401/10 must be 5A. This means that in this idealized example each of the converters provides an output voltage of 200W/5A = 40V. Now, assume that the MPPT for each panel (assuming perfect matching panels) dictates V_{MPP} = 32V. This means that the input voltage to the inverter would be 32V, and the input current would be 200W/32V = 6.25A.

We now turn to another example, wherein the system is still maintained at an ideal mode (i.e., perfectly matching DC sources and entire power is transferred to the inverter), but the environmental conditions are not ideal. For example, one DC source is overheating, is malfunctioning, or, as in the example of Figure 4B, the ninth solar panel 401/9 is shaded and consequently produces only 40W of power. Since we keep all other conditions as in the example of Figure 4A, the other nine solar panels 401 are unshaded and still produce 200W of power. The power converter 405/9 includes MPPT to maintain the solar panel 501/9 operating at the maximum power point, which is now lowered due to the shading.

The total power available from the string is now 9x200W + 40W = 1840W. Since the input to the inverter is still maintained at 400V, the input current to the inverter will now be 1840W/400V = 4.6A. This means that the output of all of the power converters 405/1-405/10 in the string must be at 4.6A. Therefore, for the nine unshaded panels, the converters will output 200W/4.6A = 43.5V. On the other hand, the converter 405/9 attached to the shaded panel 401/9 will output 40W/4.6A = 8.7V. Checking the math, the input to the inverter can be obtained by adding nine converters providing 43.5V and one converter providing 8.7V, i.e., (9x43.5V) + 8.7V = 400V.

The output of the nine non-shaded panels would still be controlled by the MPPT as in Figure 4A, thereby standing at 32V and 6.25A. On the other hand, since the nines panel 401/9 is shaded, lets assume its MPPT dropped to 28V. Consequently, the output current of the ninth panel is 40W/28V = 1.43A. As can be seen by this example, all of the panels are operated at their maximum power point, regardless of operating conditions. As shown by the example of Figure 4B, even if the output of one DC source drops dramatically, the system still maintains relatively high power output by fixing the voltage input to the inverter, and controlling the input to the converters independently so as to draw power from the DC source at the MPP.

As can be appreciated, the benefit of the topology illustrated in Figures 4A and 4B are numerous. For example, the output characteristics of the serially connected DC sources, such as solar panels, need not match. Consequently, the serial string may utilize panels from different manufacturers or panels installed on different parts of the roofs (i.e., at different spatial orientation). Moreover, if several strings are connected in parallel, it is not necessary that the strings match, rather each string may have different panels or different number of panels. This topology also enhances reliability by alleviating the hot spot problem. That is, as shown in Figure 4A the output of the shaded panel 401/9 is 1.43A, while the current at the output of the unshaded panels is 6.25A. This discrepancy in current when the components are series connected causes a large current being forced through the shaded panel that may cause overheating and malfunction at this component. However, by the inventive topology wherein the input voltage is set independently, and the power draw from each panel to its converter is set independently according to the panels MPP at each point in time, the current at each panel is independent on the current draw from the serially connected converters.

It is easily realized that since the power is optimized independently for each panel, panels could be installed in different facets and directions in BIPV installations. Thus, the problem of low power utilization in building-integrated installations is solved, and more installations may now be profitable.

The described system could also easily solve the problem of energy harvesting in low light conditions. Even small amounts of light are enough to make the converters 405 operational, and they then start transferring power to the inverter. If small amounts of power are available, there will be a low current flow - but the voltage will be high enough for the inverter to function, and the power will indeed be harvested.

According to aspects of the invention, the inverter 404 includes a control loop 420 to maintain an optimal voltage at the input of inverter 404. In the example of Figure 4B, the input voltage to inverter 404 is maintained at 400V by the control loop 420. The converters 405 are transferring substantially all of the available power from the solar panels to the input of the inverter 404. As a result, the input current to the inverter 404 is dependent only on the power provided by the solar panels and the regulated set, i.e., constant, voltage at the inverter input.

The conventional inverter 104, shown in Figure 1 and Figure 3A, is required to have a very wide input voltage to accommodate for changing conditions, for example a change in luminance, temperature and aging of the solar array. This is in contrast to the inverter 404 that is designed according to aspects of the present invention. The inverter 404 does not require a wide input voltage and is therefore simpler to design and more reliable. This higher reliability is achieved, among other factors, by the fact that there are no voltage spikes at the input to the inverter and thus the components of the inverter experience lower electrical stress and may last longer.

When the inverter 404 is a part of the circuit, the power from the panels is transferred to a load that may be connected to the inverter. To enable the inverter 404 to work at its optimal input voltage, any excess power produced by the solar array, and not used by the load, is dissipated. Excess power may be handled by selling the excess power to the utility company if such an option is available. For off-grid solar arrays, the excess power may be stored in batteries. Yet another option is to connect a number of adjacent houses together to form a micro-grid and to allow load-balancing of power between the houses. If the excess power available from the solar array is not stored or sold, then another mechanism may be provided to dissipate excess power.

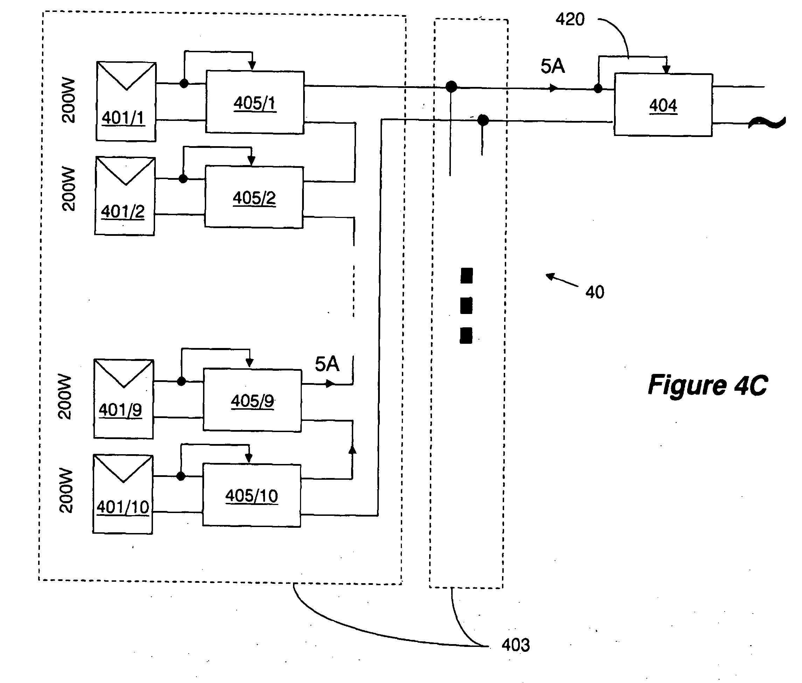

The features and benefits explained with respect to Figures 4A and 4B stem, at least partially, from having the inverter dictates the voltage provided at its input. Conversely, a design can be implemented wherein the inverter dictates the current at its input. Such an arrangement is illustrated in Figure 4C. Figure 4C illustrates an embodiment of the invention wherein the inverter controls the input current. Power output of each solar panel 401 is maintained at the maximum power point for the panel by a control loop within the corresponding power converter 405. In the example shown in Figure 4C, all of the panels are exposed to full sun illumination and each solar panel 401 provides 200W of power. Consequently, the MPPT loop will draw current and voltage level that will transfer the entire 200W from the panel to its associated converter. That is, the current and voltage dictated by the MPPT form the input current *I*ᵢₙ and input voltage *V*ᵢₙ to the converter. The output voltage is dictated by the constant current set at the inverter 404, as will be explained below. The output voltage *V*ₒᵤₜ would then be the total power, i.e., 200W, divided by the output current *I*ₒᵤₜ.

As noted above, according to a feature of the invention, the input current to inverter 404 is dictated by the inverter by way of control loop 420. For the purpose of this example, assume the input current is kept as 5A. Since we assume that there are ten serially connected power converters, each providing 200W, we can see that the input voltage to the inverter 404 is 2000W/5A = 400V. Thus, the current flowing through each of the converters 401/1-401/10 must be 5A. This means that in this idealized example each of the converters provides an output voltage of 200W/5A = 40V. Now, assume that the MPPT for each panel (assuming perfect matching panels) dictates V_{MPP} = 32V. This means that the input voltage to the inverter would be 32V, and the input current would be 200W/32V = 6.25A.

Consequently, similar advantages have been achieved by having the inverter control the current, rather than the voltage. However, unlike the prior art, changes in the output of the panels will not cause in changes in the current flowing to the inverter, as that is dictated by the inverter itself. Therefore, if the inverter is designed to keep the current or the voltage constant, then regardless of the operation of the panels, the current or voltage to the inverter will remain constant.

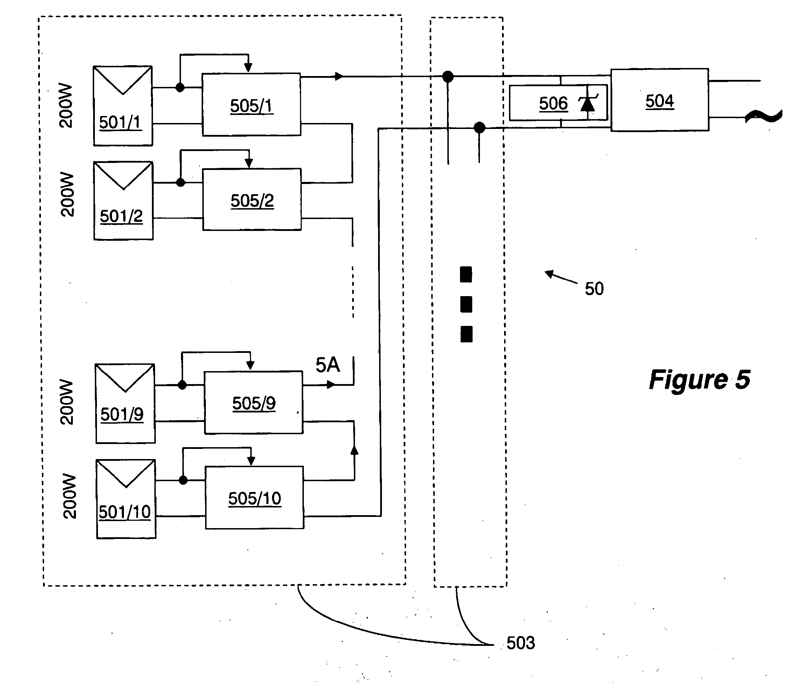

Figure 5 illustrates a distributed power harvesting system, according to other aspects of the invention, using DC power sources. Figure 5 illustrates multiple strings 503 coupled together in parallel. Each of the strings is a series connection of multiple modules and each of the modules includes a DC power source 501 that is coupled to a converter 505. The DC power source may be a solar panel. The output of the parallel connection of the strings 503 is connected, again in parallel, to a shunt regulator 506 and a load controller 504. The load controller 504 may be an inverter as with the embodiments of Figures 4A and 4B. Shunt regulators automatically maintain a constant voltage across its terminals. The shunt regulator 506 is configured to dissipate excess power to maintain the input voltage at the input to the inverter 504 at a regulated level and prevent the inverter input voltage from increasing. The current which flows through shunt regulator 506 complements the current drawn by inverter 504 in order to ensure that the input voltage of the inverter is maintained at a constant level, for example at 400V.

By fixing the inverter input voltage, the inverter input current is varied according to the available power draw. This current is divided between the strings 503 of the series connected converters. When each converter includes a controller loop maintaining the converter input voltage at the maximum power point of the associated DC power source, the output power of the converter is determined. The converter power and the converter output current together determine the converter output voltage. The converter output voltage is used by a power conversion circuit in the converter for stepping up or stepping down the converter input voltage to obtain the converter output voltage from the input voltage as determined by the MPPT.

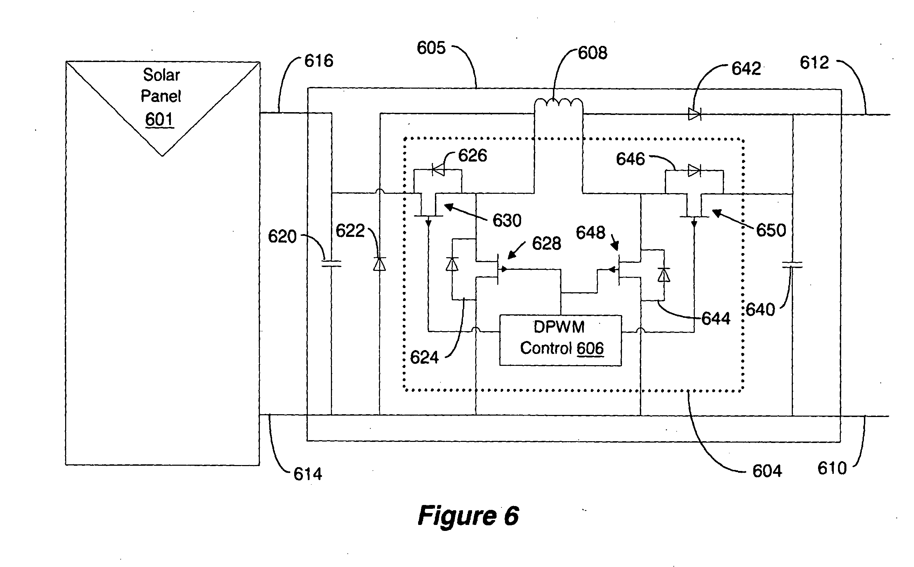

Figure 6 illustrates an exemplary DC-to-DC converter 605 according to aspects of the invention. DC-to-DC converters are conventionally used to either step down or step up a varied or constant DC voltage input to a higher or a lower constant voltage output, depending on the requirements of the circuit. However, in the embodiment of Figure 6 the DC-DC converter is used as a power converter, i.e., transferring the input power to output power, the input voltage varying according to the MPPT, while the output current being dictated by the constant input voltage to the inverter. That is, the input voltage and current may vary at any time and the output voltage and current may vary at any time, depending on the operating condition of the DC power sources.

The converter 605 is connected to a corresponding DC power source 601 at input terminals 614 and 616. The converted power of the DC power source 601 is output to the circuit through output terminals 610, 612. Between the input terminals 614, 616 and the output terminals 610, 612, the remainder of the converter circuit is located that includes input and output capacitors 620, 640, backflow prevention diodes 622, 642 and a power conversion circuit including a controller 606 and an inductor 608.

The inputs 616 and 614 are separated by a capacitor 620 which acts as an open to a DC voltage. The outputs 610 and 612 are also separated by a capacitor 640 that also acts an open to DC output voltage. These capacitors are DC-blocking or AC-coupling capacitors that short when faced with alternating current of a frequency for which they are selected. Capacitor 640 coupled between the outputs 610, 612 and also operates as a part of the power conversion circuit discussed below.

Diode 642 is coupled between the outputs 610 and 612 with a polarity such that current may not backflow into the converter 605 from the positive lead of the output 612. Diode 622 is coupled between the positive output lead 612 through inductor 608 which acts a short for DC current and the negative input lead 614 with such polarity to prevent a current from the output 612 to backflow into the solar panel 601.

The DC power sources 601 may be solar panels. A potential difference exists between the wires 614 and 616 due to the electron-hole pairs produced in the solar cells of panel 601. The converter 605 maintains maximum power output by extracting current from the solar panel 601 at its peak power point by continuously monitoring the current and voltage provided by the panel and using a maximum power point tracking algorithm. The controller 606 includes an MPPT circuit or algorithm for performing the peak power tracking. Peak power tracking and pulse width modulation, PWM, are performed together to achieve the desired input voltage and current. The MPPT in the controller 606 may be any conventional MPPT, such as, e.g., perturb and observe (P&O), incremental conductance, etc. However, notably the MPPT is performed on the panel directly, i.e., at the input to the converter, rather than at the output of the converter. The generated power is then transferred to the output terminals 610 and 612. The outputs of multiple converters 605 may be connected in series, such that the positive lead 612 of one converter 605 is connected to the negative lead 610 of the next converter 605.

In Figure 6, the converter 605 is shown as a buck plus boost converter. The term "buck plus boost" as used herein is a buck converter directly followed by a boost converter as shown in Figure 6, which may also appear in the literature as "cascaded buck-boost converter". If the voltage is to be lowered, the boost portion is substantially shorted. If the voltage is to be raised, the buck portion is substantially shorted. The term "buck plus boost" differs from buck/boost topology which is a classic topology that may be used when voltage is to be raised or lowered. The efficiency of "buck/boost" topology is inherently lower then a buck or a boost. Additionally, for given requirements, a buck-boost converter will need bigger passive components then a buck plus boost converter in order to function. Therefore, the buck plus boost topology of Figure 6 has a higher efficiency than the buck/boost topology. However, the circuit of Figure 6 continuously decides whether it is bucking or boosting. In some situations when the desired output voltage is similar to the input voltage, then both the buck and boost portions may be operational.

The controller 606 may include a pulse width modulator, PWM, or a digital pulse width modulator, DPWM, to be used with the buck and boost converter circuits. The controller 606 controls both the buck converter and the boost converter and determines whether a buck or a boost operation is to be performed. In some circumstances both the buck and boost portions may operate together. That is, as explained with respect to the embodiments of Figures 4A and 4B, the input voltage and current are selected independently of the selection of output current and voltage. Moreover, the selection of either input or output values may change at any given moment depending on the operation of the DC power sources. Therefore, in the embodiment of Figure 6 the converter is constructed so that at any given time a selected value of input voltage and current may be up converted or down converted depending on the output requirement.

In one implementation, an integrated circuit (IC) 604 may be used that incorporates some of the functionality of converter 605. IC 604 is optionally a single ASIC able to withstand harsh temperature extremes present in outdoor solar installations. ASIC 604 may be designed for a high mean time between failures (MTBF) of more than 25 years. However, a discrete solution using multiple integrated circuits may also be used in a similar manner. In the exemplary embodiment shown in Figure 6, the buck plus boost portion of the converter 605 is implemented as the IC 604. Practical considerations may lead to other segmentations of the system. For example, in one aspect of the invention, the IC 604 may include two ICs, one analog IC which handles the high currents and voltages in the system, and one simple low-voltage digital IC which includes the control logic. The analog IC may be implemented using power FETs which may alternatively be implemented in discrete components, FET drivers, A/Ds, and the like. The digital IC may form the controller 606.

In the exemplary circuit shown, the buck converter includes the input capacitor 620, transistors 628 and 630 a diode 622 positioned in parallel to transistor 628, and an inductor 608. The transistors 628, 630 each have a parasitic body diode 624, 626. In the exemplary circuit shown, the boost converter includes the inductor 608, which is shared with the buck converter, transistors 648 and 650 a diode 642 positioned in parallel to transistor 650, and the output capacitor 640. The transistors 648, 650 each have a parasitic body diode 644, 646.

As shown in Figure 1, adding electronic elements in the series arrangement may reduce the reliability of the system, because if one electrical component breaks it may affect the entire system. Specifically, if a failure in one of the serially connected elements causes an open circuit in the failed element, current ceases to flow through the entire series, thereby causing the entire system to stop function. Aspects of the present invention provide a converter circuit where electrical elements of the circuit have one or more bypass routes associated with them that carry the current in case of the electrical element fails. For example, each switching transistor of either the buck or the boost portion of the converter has its own bypass. Upon failure of any of the switching transistors, that element of the circuit is bypassed. Also, upon inductor failure, the current bypasses the failed inductor through the parasitic diodes of the transistor used in the boost converter.

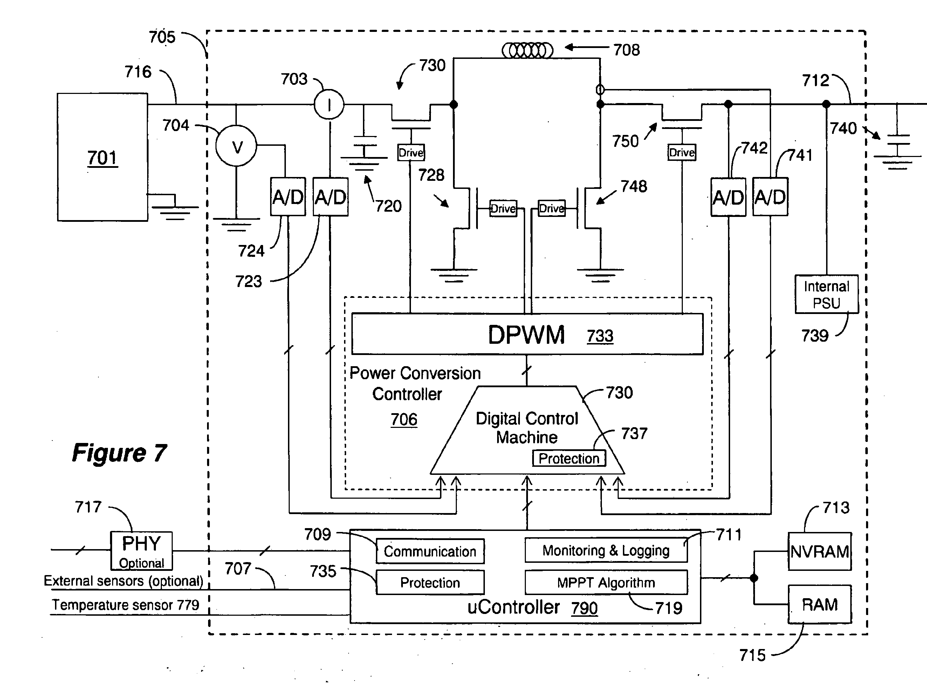

Figure 7 illustrates a power converter, according to aspects of the invention. Figure 7 highlights, among others, a monitoring and control functionality of a DC-to-DC converter 705, according to embodiments of the present invention. A DC voltage source 701 is also shown in the figure. Portions of a simplified buck and boost converter circuit are shown for the converter 705. The portions shown include the switching transistors 728, 730, 748 and 750 and the common inductor 708. Each of the switching transistors is controlled by a power conversion controller 706.

The power conversion controller 706 includes the pulse-width modulation (PWM) circuit 733, and a digital control machine 730 including a protection portion 737. The power conversion controller 706 is coupled to microcontroller 790, which includes an MPPT module 719, and may also optionally include a communication module 709, a monitoring and logging module 711, and a protection module 735.

A current sensor 703 may be coupled between the DC power source 701 and the converter 705, and output of the current sensor 703 may be provided to the digital control machine 730 through an associated analog to digital converter 723. A voltage sensor 704 may be coupled between the DC power source 701 and the converter 705 and output of the voltage sensor 704 may be provided to the digital control machine 730 through an associated analog to digital converter 724. The current sensor 703 and the voltage sensor 704 are used to monitor current and voltage output from the DC power source, e.g., the solar panel 701. The measured current and voltage are provided to the digital control machine 730 and are used to maintain the converter input power at the maximum power point.

The PWM circuit 733 controls the switching transistors of the buck and boost portions of the converter circuit. The PWM circuit may be a digital pulse-width modulation (DPWM) circuit. Outputs of the converter 705 taken at the inductor 708 and at the switching transistor 750 are provided to the digital control machine 730 through analog to digital converters 741, 742, so as to control the PWM circuit 733.

A random access memory (RAM) module 715 and a non-volatile random access memory (NVRAM) module 713 may be located outside the microcontroller 790 but coupled to the microcontroller 790. A temperature sensor 779 and one or more external sensor interfaces 707 may be coupled to the microcontroller 790. The temperature sensor 779 may be used to measure the temperature of the DC power source 701. A physical interface 717 may be coupled to the microcontroller 790 and used to convert data from the microcontroller into a standard communication protocol and physical layer. An internal power supply unit 739 may be included in the converter 705.

In various aspects of the invention, the current sensor 703 may be implemented by various techniques used to measure current. In one aspect of the invention, the current measurement module 703 is implemented using a very low value resistor. The voltage across the resistor will be proportional to the current flowing through the resistor. In another aspect of the invention, the current measurement module 703 is implemented using current probes which use the Hall Effect to measure the current through a conductor without adding a series resistor. After translating the current to voltage, the data may be passed through a low pass filter and then digitized. The analog to digital converter associated with the current sensor 703 is shown as the A/D converter 723 in Figure 7. Aliasing effect in the resulting digital data may be avoided by selecting an appropriate resolution and sample rate for the analog to digital converter. If the current sensing technique does not require a series connection, then the current sensor 703 may be connected to the DC power source 701 in parallel.

In one aspect of the invention, the voltage sensor 704 uses simple parallel voltage measurement techniques in order to measure the voltage output of the solar panel. The analog voltage is passed through a low pass filter in order to minimize aliasing. The data is then digitized using an analog to digital converter. The analog to digital converter associated with the voltage sensor 704 are shown as the A/D converter 724 in Figure 7. The A/D converter 724 has sufficient resolution to generate an adequately sampled digital signal from the analog voltage measured at the DC power source 701 that may be a solar panel.

The current and voltage data collected for tracking the maximum power point at the converter input may be used for monitoring purposes also. An analog to digital converter with sufficient resolution may correctly evaluate the panel voltage and current. However, to evaluate the state of the panel, even low sample rates may be sufficient. A lowpass filter makes it possible for low sample rates to be sufficient for evaluating the state of the panel. The current and voltage date may be provided to the monitoring and logging module 711 for analysis.

The temperature sensor 779 enables the system to use temperature data in the analysis process. The temperature is indicative of some types of failures and problems. Furthermore, in the case that the power source is a solar panel, the panel temperature is a factor in power output production.

The one or more optional external sensor interfaces 707 enable connecting various external sensors to the converter 705. External sensors are optionally used to enhance analysis of the state of the solar panel 701, or a string or an array formed by connecting the solar panels 701. Examples of external sensors include ambient temperature sensors, solar radiance sensors, and sensors from neighboring panels. External sensors may be integrated into the converter 705 instead of being attached externally.

In one aspect of the invention, the information acquired from the current and voltage sensors 703, 704 and the optional temperature and external sensors 705, 707 may be transmitted to a central analysis station for monitoring, control, and analysis using the communications interface 709. The central analysis station is not shown in the figure. The communication interface 709 connects a microcontroller 790 to a communication bus. The communication bus can be implemented in several ways. In one aspect of the invention, the communication bus is implemented using an off-the-shelf communication bus such as Ethernet or RS422. Other methods such as wireless communications or power line communications, which could be implemented on the power line connecting the panels, may also be used. If bidirectional communication is used, the central analysis station may request the data collected by the microcontroller 790. Alternatively or in addition, the information acquired from sensors 703, 704, 705, 707 is logged locally using the monitoring and logging module 711 in local memory such as the RAM 715 or the NVRAM 713.

Analysis of the information from sensors 703, 704, 705, 707 enables detection and location of many types of failures associated with power loss in solar arrays. Smart analysis can also be used to suggest corrective measures such as cleaning or replacing a specific portion of the solar array. Analysis of sensor information can also detect power losses caused by environmental conditions or installation mistakes and prevent costly and difficult solar array testing.

Consequently, in one aspect of the invention, the microcontroller 790 simultaneously maintains the maximum power point of input power to the converter 705 from the attached DC power source or solar panel 701 based on the MPPT algorithm in the MPPT module 719 and manages the process of gathering the information from sensors 703, 704, 705, 707. The collected information may be stored in the local memory 713, 715 and transmitted to an external central analysis station. In one aspect of the invention, the microcontroller 790 uses previously defined parameters stored in the NVRAM 713 in order to operate. The information stored in the NVRAM 713 may include information about the converter 705 such as serial number, the type of communication bus used, the status update rate and the ID of the central analysis station. This information may be added to the parameters collected by the sensors before transmission.

The converters 705 may be installed during the installation of the solar array or retrofitted to existing installations. In both cases, the converters 705 may be connected to a panel junction connection box or to cables connecting the panels 701. Each converter 705 may be provided with the connectors and cabling to enable easy installation and connection to solar panels 701 and panel cables.

In one aspect of the invention, the physical interface 717 is used to convert to a standard communication protocol and physical layer so that during installation and maintenance, the converter 705 may be connected to one of various data terminals, such as a computer or PDA. Analysis may then be implemented as software which will be run on a standard computer, an embedded platform or a proprietary device.

The installation process of the converters 705 includes connecting each converter 705 to a solar panel 701. One or more of the sensors 703, 704, 705, 707 may be used to ensure that the solar panel 701 and the converter 705 are properly coupled together. During installation, parameters such as serial number, physical location and the array connection topology may be stored in the NVRAM 713. These parameters may be used by analysis software to detect future problems in solar panels 701 and arrays.

When the DC power sources 701 are solar panels, one of the problems facing installers of photovoltaic solar panel arrays is safety. The solar panels 701 are connected in series during the day when there is sunlight. Therefore, at the final stages of installation, when several solar panels 701 are connected in series, the voltage across a string of panels may reach dangerous levels. Voltages as high as 600V are common in domestic installations. Thus, the installer faces a danger of electrocution. The converters 705 that are connected to the panels 701 may use built-in functionality to prevent such a danger. For example, the converters 705 may include circuitry or hardware of software safety module that limits the output voltage to a safe level until a predetermined minimum load is detected. Only after detecting this predetermined load, the microcontroller 790 ramps up the output voltage from the converter 705.

Another method of providing a safety mechanism is to use communications between the converters 705 and the associated inverter for the string or array of panels. This communication, that may be for example a power line communication, may provide a handshake before any significant or potentially dangerous power level is made available. Thus, the converters 705 would wait for an analog or digital release signal from the inverter in the associated array before transferring power to inverter.

The above methodology for monitoring, control and analysis of the DC power sources 701 may be implemented on solar panels or on strings or arrays of solar panels or for other power sources such as batteries and fuel cells.

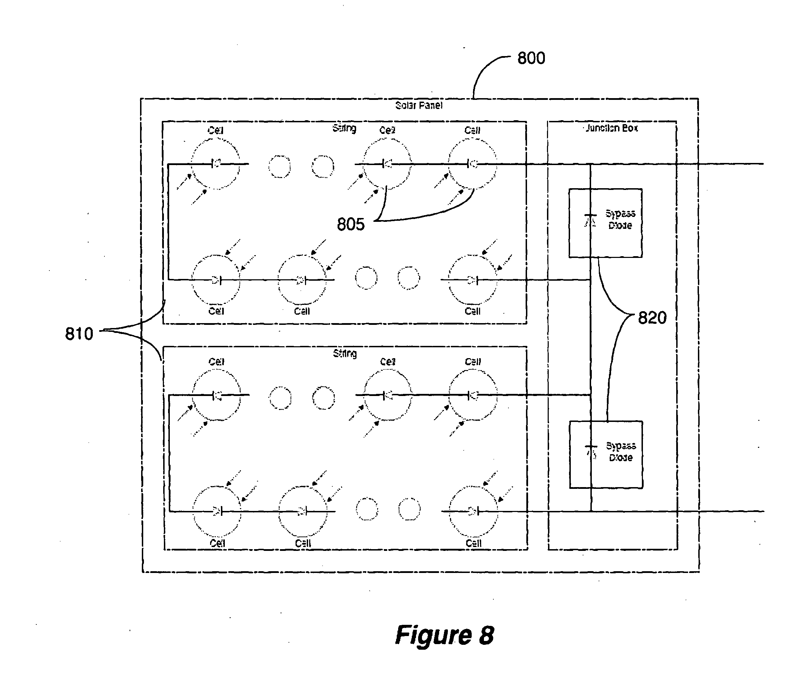

Figure 8 illustrates an arrangement of a solar panel according to the prior art. In Figure 8, solar panel 800 comprises solar cells 805, which are grouped into serially connected strings 810. The strings 810 are connected together in series. For each string 810, a bypass diode 820 is provided so that in the event of drop in power output of one string, that string may be bypassed via the respective diode 820 instead of having the cells enter a negative voltage region, which will lead to power dissipation across them and may cause them to burn. However, when current flows through the diodes, they dissipate energy. For example, if a current of 5A flows through a conventional diode having 0.7 volt cut-in voltage, the loss is 3.5W. In practice the loss may easily amount to 10W.

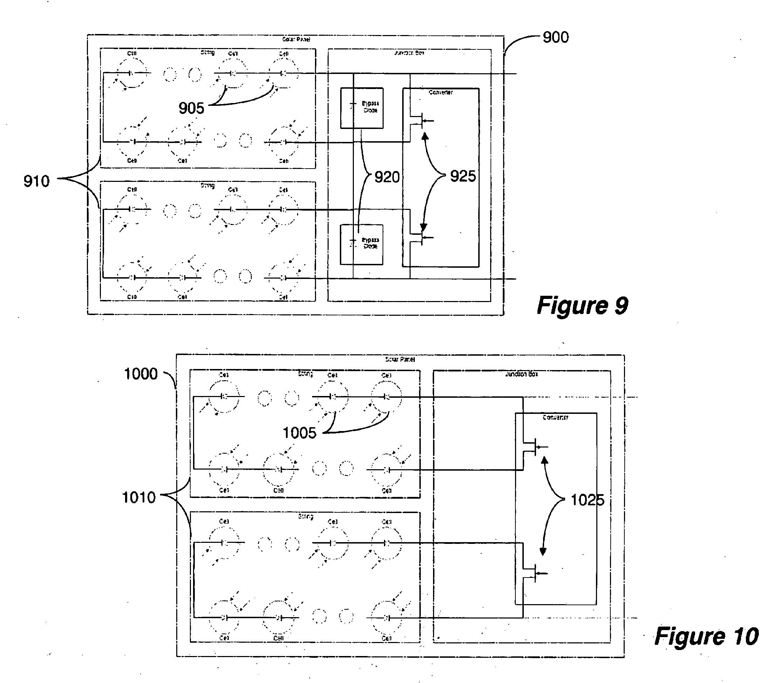

Figure 9 illustrates an arrangement according to an embodiment of the invention for reducing the power loss in solar strings. In Figure 9, the solar panel 900 is made of solar cells 905, which are grouped into serially connected strings 910. The strings 910 are connected together in series. For each string 910, a bypass diode 920 is provided so that in the event of drop in power output of one string, that string may be bypassed via the respective diode 920. Additionally, one switching device, such as FET or IGBT (insulated gate bipolar transistor), 925 is connected in a by-pass configuration so as to bypass the respective diode. Once it is sensed that current is flowing via one diode 920 (or once the voltage across string 910 is sensed to be negative), its respective switching device 925 is activated. This directs the current through the switching device, so that the loss of energy is drastically reduced. The sensing can be done by, for example, sensing the voltage across the string or the current across the diode.

Figure 10 illustrates another arrangement according to an embodiment of the invention for reducing the power loss in solar strings. In Figure 10, the solar panel 1000 is made of solar cells 1005, which are grouped into serially connected strings 1010. The strings 1010 are connected together in parallel. For each string 1010, a bypass switching device 1025, such as FET or IGBT, is provided so that in the event of drop in power output of one string, that string may be bypassed via the respective switching device 1025. Once it is sensed that a string 1010 enters reverse bias (whether due to poor lighting or malfunction), the respective switching device 1025 is turned on so that current is flowing via its respective switching device 1025. The sensing can be done by, for example, sensing the voltage or current of the string.

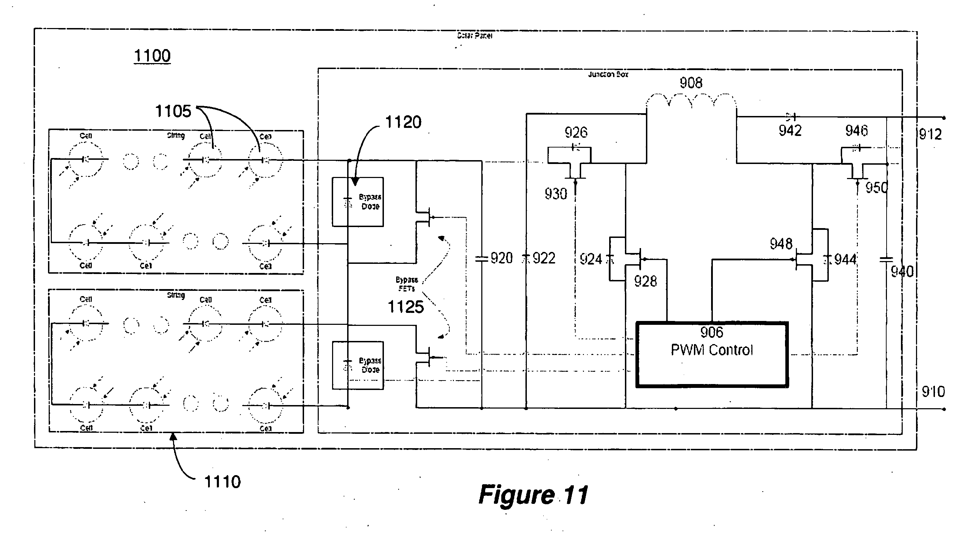

Figure 11 illustrates an arrangement according to an embodiment of the invention for bypassing a solar string. That is, Figure 11 illustrates how a converter, such as, for example, the converter of Figure 6, may be utilized to trigger the bypass of the solar string and/or a diode coupled across a solar string. In Figure 11, the solar panel 1100 is made of solar cells 1105, which are grouped into serially connected strings 1110. The strings 1110 are connected together in parallel. For each string 1110, a bypass diode 1120 is provided so that in the event of drop in power output of one string, that string may be bypassed via the respective diode 1120. However, as explained with respect to Figure 10, the diodes may be eliminated. Additionally, one switching device, such as FET or IGBT, 1125 is connected in a by-pass configuration so as to bypass the respective string 1110 and/or diode 1120. Once it is sensed that a solar string enters reverse bias, its respective switching device 1125 is activated by the controller 906. This directs the current through the switching device 1125, so that the loss of energy is drastically reduced. The sensing can be done by, for example, sensing the voltage across the string or the current across the diode, as explained with respect to elements 703 and 704 of Figure 7.

The present invention has been described in relation to particular examples, which are intended in all respects to be illustrative rather than restrictive. Those skilled in the art will appreciate that many different combinations of hardware, software, and firmware will be suitable for practicing the present invention. Moreover, other implementations of the invention will be apparent to those skilled in the art from consideration of the specification and practice of the invention disclosed herein. It is intended that the specification and examples be considered as exemplary only, with a true scope of the invention being indicated by the following claims and their equivalents.

## Claims

1. A distributed power harvesting system comprising:
a plurality of DC power sources (301,401,301,601,701);
a plurality of converters (305,405,505,605,705), and
wherein each of the converters (305,405,505,605,705) comprises:
i input terminals (614,616,716) coupled to a respective DC power source (301,401,301,601,701);
ii output terminals (610,612,712) coupled in series to the other converters (305,405,505,605,705), thereby forming a serial string; and
iii a power conversion portion (604) for converting the power received at the input terminals (614,616) to an output power at the output terminals (610,612,712); and
a power delivery device (304,404,504) coupled to the serial string,
**characterized in that**
the converters (305,405,505,605,705) are buck plus boost converters each comprising a buck converter, a boost converter, a controller (606) and a circuit loop (608,708) setting the voltage and current at the input terminals (614,616,716) of the buck plus boost converters (305,405,505,605,705) according to predetermined criteria;
wherein, in response to the MPPT part and current or voltage at the output terminals (610,612), the controller (606) either selectively activates either the buck converter or the boost converter or activates the buck converter and the boost converter together, and that the power delivery device (304,404,504) comprises a control part maintaining the input voltage to the power delivery device (304,404,504) at a predetermined value.

2. The distributed power harvesting system of claim 1, wherein the circuit loop (608,708) comprises an MPPT part setting the voltage and current at the input terminals (614,616,716) of the buck plus boost converter (305,405,505,605,705) to maximum power point of the respective DC power source (301,401,301,601,701).

3. The distributed power harvesting system of claim 1, wherein the control part comprises a shunt regulator coupled in parallel with the power delivery device (304,404,504) and regulating the input voltage to a preselected constant input voltage.

4. The distributed power harvesting system of claim 1, further comprising:
a plurality of current sensors; and a plurality of voltage sensors;
wherein each of the current sensors and each of the voltage sensors is coupled between a respective buck plus boost converter and DC power source (301,401,301,601,701) and providing current information and voltage information to the MPPT part.

5. The distributed power harvesting system of claim 1, wherein each of the plurality of DC power sources (301,401,301,601,701) comprises any of a solar panel, a building integrated solar panel, a fuel cell or a battery.

6. The distributed power harvesting system of claim 1, wherein each of the plurality of buck plus boost converters (305,405,505,605,705) further comprises a safety module limiting the output to a preset safe value until a predetermined event has occurred.

7. The distributed power harvesting system of claim 1, wherein each of the buck plus boost converters (305,405,505,605,705) further comprises a plurality of switching devices, each of the switching devices forming a current bypass to at least one DC power source (301,401,301,601,701).

8. A method for harvesting power from a distributed power system having a plurality of DC power sources (301,401,301,601,701) and a plurality of DC power converters (305,405,505,605,705), the method comprising:
coupling each of the power sources (301,401,301,601,701) to a respective DC power converter (305,405,505,605,705);
coupling the power converters (305,405,505,605,705) in series, to thereby form at least one serial string;
coupling the serial string to a power delivery device (304,404,504);
fixing the input voltage to the power delivery device (304,404,504) to a predetermined value, thereby forcing current flowing through the serial string to vary according to power provided by the power sources (301,401,301,601,701); and
controlling power output from each power source (301,401,301,601,701) individually and individually varying the input voltage and current to each respective converter (305,405,505,605,705) according to a predetermined criteria,
wherein buck plus boost converters are used each comprising a buck converter, a boost converter, a controller (606) and a circuit loop (608,708) setting the voltage and current at the input terminals (614,616,716) of the buck plus boost converters (305,405,505,605,705) according to predetermined criteria,
wherein, in response to the MPPT part and current or voltage at the output terminals (610,612), the controller (606) either selectively activates either the buck converter or the boost converter or activates the buck converter and the boost converter together..

9. The method of claim 8, further comprising individually operating each buck plus boost converter (305,405,505,605,705) to monitor and report power related data, the power related data comprising at least one of: input current to the buck plus boost converter (305,405,505,605,705), input voltage to the buck plus boost converter (305,405,505,605,705), temperature of the power source, input power to the buck plus boost converter (305,405,505,605,705), and available illumination.

## Patentansprüche

1. Verteiltes Leistungswandler-System umfassend:
eine Vielzahl von Gleichstrom-Leistungsquellen (301, 401, 501, 601, 701);
eine Vielzahl von Wandlern (305, 405, 505, 605, 705), worin
jeder der Wandler (305, 405, 505, 605, 705) umfasst:
i Eingangsanschlüsse (614, 616, 716), die an eine jeweiligen Gleichstrom-Leistungsquelle gekoppelt sind;
ii Ausgangsanschlüsse (610, 612, 712), die in Reihe mit den Wandlern ((305, 405, 505, 605,705) gekoppelt sind, und dadurch eine Reiheneinschaltungskette bilden; und
iii einen Leistungswandlerabschnitt (604) zum Wandeln der an den Eingangsanschlüssen (614,616) empfangenen Leistung in eine Ausgangsleistung an den Ausgangsanschlüssen (610,612,712) umzusetzen; und
eine Leistungsabgabeeinrichtung (304, 404, 504), die mit der Reiheneinschaltungskette gekoppelt ist,
**dadurch gekennzeichnet, dass**
die Wandler (305, 405, 505, 605, 705) Abwärts- plus Aufwärts-Wandler sind, die jeweils einen Abwärtswandler, einen Aufwärts-Wandler, einen Controller (606) und eine Schaltungsschleife (608, 708) umfassen, die die Spannung und den Strom an den Eingangsanschlüssen (614, 616, 716) der Abwärts- plus Aufwärts-Wandler (305, 405, 505, 605, 705) entsprechend vorgegebenen Kriterien einstellen;
wobei in Antwort auf den MPPT-Teil und den Strom oder die Spannung an den Ausgangsanschlüssen (610, 612) der Controller (606) entweder den Abwärtswandler oder den Aufwärts-Wandler selektiv aktiviert oder den Abwärtswandler und den Aufwärts-Wandler zusammen aktiviert, und dass die Leistungsabgabeeinrichtung (304, 404, 504) einen Kontrollteil umfasst, der die Eingangsspannung an der Leistungsabgabeeinrichtung (304, 404, 504) auf einem vorgegebenen Wert hält.

2. Verteiltes Leistungswandlersystem nach Anspruch 1, worin die Schaltungsschleife (608, 708) einen MPPT-Teil umfasst, der die Spannung und den Strom an den Eingangsanschlüssen (614, 616, 716) der Abwärts- plus Aufwärts-Wandler (305, 405, 505, 605, 705) auf einen maximalen Leistungspunkt der jeweiligen Gleichstrom-Leistungsquelle (301,401, 501, 601, 701) einstellt.

3. Verteiltes Leistungswandlersystem nach Anspruch 1, worin der Kontrollteil einen Shunt-Regler aufweist, der parallel zu der Leistungsabgabeeinrichtung (304,404,504) geschaltet ist und die Eingangsspannung auf eine vorgewählte, konstante Eingangsspannung regelt.

4. Verteiltes Leistungswandlersystem nach Anspruch 1, ferner umfassend:
eine Vielzahl von Stromsensoren und eine Vielzahl von Spannungssensoren;
wobei jeder der Stromsensoren und jeder der Spannungssensoren zwischen einem zugehörigen Abwärts- plus Aufwärts-Wandler und der Gleichstrom-Leistungsquelle (301,401, 501, 601, 701) gekoppelt ist und eine Strominformation und eine Spannungsinformation an den MPPT-Teil liefert.

5. Verteiltes Leistungswandlersystem nach Anspruch 1, worin jede der Vielzahl der Gleichstrom-Leistungsquellen (301 ,401, 501, 601, 701) eines aus einem Solarpanel, einem mit dem Gebäude integrierten Solarpanel, eine Kraftstoffzelle oder eine Batterie umfasst.

6. Verteiltes Leistungswandlersystem nach Anspruch 1, worin jede der Vielzahl der Abwärtsplus Aufwärts-Wandler (305, 405, 505, 605, 705) ferner ein Sicherheitsmodul umfasst, das den Ausgang auf einen voreingestellten, sicheren Wert begrenzt, bis ein vorbestimmtes Ereignis eingetreten ist.

7. Verteiltes Leistungswandlersystem nach Anspruch 1, worin jeder der Abwärts- plus Aufwärts-Wandler (305, 405, 505, 605, 705) ferner eine Vielzahl von Schalteinrichtungen aufweist, wobei jede der Schalteinrichtungen eine Stromumleitung zu wenigstens einer der Gleichstrom-Leistungsquelle (301, 401, 501, 601, 701) bildet.

8. Verfahren zur Leistungsumwandlung bei einem verteilten Leistungswandlersystem mit einer Vielzahl von Gleichstrom-Leistungsquellen (301, 401, 501,601, 701) und einer Vielzahl von Gleichstrom-Leistungswandlern (305, 405, 505, 605, 705), wobei das Verfahren umfasst:
Ankoppeln von jeder der Leistungsquellen (301, 401, 501, 601, 701) an einen jeweiligen Gleichstrom-Leistungswandler (305, 405, 505, 605, 705);
Koppen der Leistungswandler (305, 405, 505, 605, 705) in Reihe, um dadurch wenigstens eine Reihenschaltungskette zu bilden;
Koppeln der Reihenschaltungskette mit einer Leistungsabgabeeinrichtung (304, 404, 504);
Fixieren der Eingangsspannung an die Leistungsabgabeeinrichtung (304,404,504) an einem vorgegebenen Wert, um dadurch zu erzwingen, dass der Strom, der durch die Reihenschaltungskette fließt, entsprechend der Leistung, die durch die Leistungsquellen (301, 401, 501, 601, 701) geliefert wird, variiert; und
individuelles Steuern des Leistungsausgangs von jeder Leistungsquelle (301, 401, 501, 601, 701) und individuelles Variieren der Eingangsspannung und des Stroms an jedem entsprechenden Wandler (305, 405, 505, 605, 705) entsprechend vorgegebenen Kriterien,
worin Abwärts- plus Aufwärts-Wandler verwendet werden, die jeweils einen Abwärtswandler, einen Aufwärts-Wandler, einen Controller (606) und eine Schaltungsschleife (608, 708) aufweisen, die die Spannung und den Strom an den Eingangsanschlüssen (614, 616, 716) der Abwärts- plus Aufwärts-Wandler (305, 405, 505, 605, 705) nach vorgegebenen Kriterien einstellen,
worin der Controller (606) in Antwort auf den MPPT-Teil und den Strom oder die Spannung aus den Ausgangsanschlüssen (610, 612) entweder den Abwärtswandler oder den Aufwärts-Wandler selektiv aktiviert oder den Abwärtswandler und den Aufwärts-Wandler zusammen aktiviert.

9. Verfahren nach Anspruch 8, ferner umfassend, das individuelle Betreiben von jedem Abwärtsplus Aufwärts-Wandler (305, 405, 505, 605, 705), um leistungsbezogene Daten zu überwachen und zu berichten, wobei die leistungsbezogenen Daten wenigstens eines von folgendem aufweisen: den Eingangsstrom an die Abwärts- plus Aufwärts-Wandler (305, 405, 505, 605, 705), die Eingangsspannung der Abwärts- plus Aufwärts-Wandler (305, 405, 505, 605,705), die Temperatur der Leistungsquelle, die Eingangsleistung der Abwärts- plus Aufwärts-Wandler (305, 405, 505, 605, 705) und die zur Verfügung stehende Ausleuchtung.

## Revendications

1. Système de collecte d'énergie distribuée comprenant:
- une pluralité de sources d'énergie DC (301, 401, 501, 601, 701);
- une pluralité de convertisseurs (305, 405, 505, 605, 705), et
- où chacun d'entre les convertisseurs (305, 405, 505,605,705) comprend:
(i) les bornes d'entrée (614, 616, 716) couplées à une source d'énergie DC respective (301, 401, 501, 601, 701);
(ii) les bornes de sortie (610, 612, 712) couplées en série aux autres convertisseurs (305, 405, 505, 605, 705), formant ainsi une chaîne en série; et
(iii) une portion de conversion d'énergie (604) pour convertir l'énergie reçue aux bornes d'entrée (614, 616) à une énergie de sortie aux bornes de sortie (610, 612, 712); et un dispositif de délivrance d'énergie (304, 404, 504) couplé à la chaîne en série,
**caractérisé en ce que**
les convertisseurs (305, 405, 505, 605, 705) sont des convertisseurs de type Buck-Boost chacun comprenant un convertisseur Buck, un convertisseur Boost, un dispositif de commande (606) et une boucle de circuit (608, 708) réglant la tension et le courant aux bornes d'entrée (614, 616, 716) des convertisseurs Buck-Boost (305, 405, 505, 605, 705) selon les critères prédéterminés;
où, en réponse à la partie MPPT et le courant ou la tension aux bornes de sortie (610, 612), le dispositif de commande (606) active sélectivement soit le convertisseur Buck soit le convertisseur Boost soit active le convertisseur Buck et le convertisseur Boost ensemble, et que le dispositif de délivrance d'énergie (304, 404, 504) comprend une partie de commande maintenant la tension d'entrée au dispositif de délivrance d'énergie (304, 404, 504) à une valeur prédéterminée.

2. Système de collecte d'énergie distribuée selon la revendication 1, où la boucle de circuit (608, 708) comprend une partie MPPT réglant la tension et le courant aux bornes d'entrée (614, 616, 716) du convertisseur Buck-Boost (305, 405, 505, 605, 705) au point de puissance maximale de la source d'énergie DC respective (301, 401, 501, 601, 701).

3. Système de collecte d'énergie distribuée selon la revendication 1, où la partie de commande comprend un régulateur shunt couplé en parallèle avec le dispositif de délivrance d'énergie (304, 404, 504) et réglant la tension d'entrée à une tension d'entrée constante présélectée.

4. Système de collecte d'énergie distribuée selon la revendication 1, comprenant de plus:
- une pluralité de capteurs de courant; et une pluralité de capteurs de tension;
- où chacun d'entre les capteurs de courant et chacun d'entre les capteurs de tension est couplé entre un convertisseur Buck-Boost respectif et la source d'énergie DC (301, 401, 501, 601, 701) et fournissant l'information de courant et l'information de tension à la partie MPPT.

5. Système de collecte d'énergie distribuée selon la revendication 1, où chacune de la pluralité de sources d'énergie DC (301, 401, 501, 601, 701) comprend n'importe lequel d'entre un panneau solaire, un panneau solaire intégré en construction, une pile à combustible ou une batterie.

6. Système de collecte d'énergie distribuée selon la revendication 1, où chacune de la pluralité de convertisseurs Buck-Boost (305, 405, 505, 605, 705) comprend de plus un module de sûreté limitant la sortie à une valeur de sécurité établie en préalable jusqu'à ce qu'un événement prédéterminé se produit.

7. Système de collecte d'énergie distribuée selon la revendication 1, où chacune de la pluralité de convertisseurs Buck-Boost (305, 405, 505, 605, 705) comprend de plus une pluralité de dispositifs de commutation, chacun d'entre les dispositifs de commutation formant un by-pass de courant à au moins une source d'énergie DC (301, 401, 501, 601, 701).

8. Procédé de collecte d'énergie à partir d'un système d'énergie distribuée ayant une pluralité de sources d'énergie DC (301, 401, 501, 601, 701) et une pluralité de convertisseurs d'énergie DC (305, 405, 505, 605, 705), le procédé comprenant:
- coupler chacune d'entre les sources d'énergie DC (301, 401, 501, 601, 701) à un convertisseur d'énergie DC respectif (305, 405, 505, 605, 705), et
- coupler les convertisseurs d'énergie (305, 405, 505, 605, 705) en série, pour former de cette manière au moins une chaîne en série
coupler la chaîne en série à un dispositif de délivrance d'énergie (304, 404, 504);
- fixer la tension d'entrée au dispositif de délivrance d'énergie (304, 404, 504) à une valeur prédéterminée, forçant ainsi le courant circuler par la chaîne en série pour varier selon l'énergie fournie par les sources d'énergie (301, 401, 501, 601, 701); et
- commander l'énergie sortie de chaque source d'énergie (301, 401, 501, 601, 701) de manière individuelle et variant de manière individuelle la tension d'entrée et le courant à chaque convertisseur respectif (305, 405, 505, 605, 705) selon un critère prédéterminé,
où les convertisseurs Buck-Boost sont utilisés chacun comprenant un convertisseur Buck, un convertisseur Boost, un dispositif de commande (606) et une boucle de circuit (608, 708) réglant la tension et le courant aux bornes d'entrée (614, 616, 716) des convertisseurs Buck-Boost (305, 405, 505, 605, 705) selon les critères prédéterminés;
- où, en réponse à la partie MPPT et le courant ou la tension aux bornes de sortie (610, 612), le dispositif de commande (606) active sélectivement soit le convertisseur Buck soit le convertisseur Boost soit active le convertisseur Buck et le convertisseur Boost ensemble.

9. Procédé selon la revendication 8, comprenant de plus agir individuellement chaque convertisseur Buck-Boost (305, 405, 505, 605, 705) pour surveiller et rapporter les données liées d'énergie, les données liées d'énergie comprenant au moins l'une d'entre: le courant d'entrée au convertisseur Buck-Boost (305, 405, 505, 605, 705), la tension d'entrée au convertisseur Buck-Boost (305, 405, 505, 605, 705), la température de la source d'énergie, l'énergie d'entrée au convertisseur Buck-Boost (305, 405, 505, 605, 705), et l'illumination disponible.
